(19) Europäisches Patentamt
European Patent Office
Office européen des brevets

(11) Numéro de publication : **0 074 895 B1**

(12) **FASCICULE DE BREVET EUROPÉEN**

(45) Date de publication du fascicule du brevet :
20.08.86

(51) Int. Cl.⁴ : **H 02 K 23/24, H 02 K 31/02, H 02 K 23/28, H 02 K 1/10**

(21) Numéro de dépôt : **82401639.8**

(22) Date de dépôt : **09.09.82**

(54) Machines électriques tournantes à courant continu à pôles de compensation auxiliaires.

(30) Priorité : 10.09.81 FR 8117129

(43) Date de publication de la demande :
23.03.83 Bulletin 83/12

(45) Mention de la délivrance du brevet :
20.08.86 Bulletin 86/34

(84) Etats contractants désignés :
CH DE GB IT LI SE

(56) Documents cités :
DE-A- 1 638 206
DE-C- 53 335
FR-A- 323 569
US-A- 1 814 061
US-A- 1 910 473
US-A- 3 579 005
US-A- 3 648 088
US-A- 4 041 338

(73) Titulaire : ETAT-FRANCAIS représenté par le DELE-
GUE GENERAL POUR L'ARMEMENT
Bureau des Brevets et Inventions de la Délégation
Générale pour l'Armement 14, rue Saint-Dominique
F-75997 Paris Armées (FR)

(72) Inventeur : Saint-Michel, Jacques
résidence Vaubant
B-5960 Maubeuge (BE)
Inventeur : Chabrerie , Jean-Pierre
140 allée de la Pointe Genète
F-91190 Gyf/Yvette (FR)
Inventeur : Mailfert, Alain
45, Hameau des Noisetiers
F-54136 Bouxieres Aux Dames (FR)

# `Description

La présente invention concerne des perfectionnements aux machines électriques tournantes à courant continu, et plus particulièrement, des dispositifs d'aide à la commutation pour machines homopolaires et hétéropolaires.

Les machines électriques à courant continu présentent, en fonctionnement, un certain nombre de problèmes tenant aux phénomènes de commutation se manifestant au niveau de l'interface entre les contacts glissants et les conducteurs de l'induit. Des progrès très nets ont été effectués au niveau de la réalisation des contacts glissants eux-mêmes, qui se sont traduits notamment par la mise au point de contacts glissants multi-filamentaires faisant par exemple l'objet du brevet français 2 404 936.

Ce nonobstant, des phénomènes de commutation apparaissent chaque fois qu'un conducteur d'induit entre sous les contacts glissants ou quitte ces contacts, ce type de phénomène intervenant par exemple à chaque instant sur l'ensemble des conducteurs d'induit dans les machines homopolaires à élévation de tension. D'autre part, si la compensation de la réaction magnétique d'induit peut s'effectuer classiquement par le retour du courant induit à la surface des pôles inducteurs, il faut prendre en outre garde aux courants parasites qui peuvent être engendrés dans les conducteurs d'induit du fait d'une non-homogénéité du champ magnétique dans les parties actives de la machine, c'est-à-dire dans les pôles inducteurs, à cet égard, le fonctionnement sous chaque pôle inducteur d'une machine hétéropolaire est similaire à celui d'une machine homopolaire traditionnelle. Les courants parasites peuvent ainsi circuler entre les différents conducteurs adjacents de l'induit qui se retrouvent temporairement placés en parallèle par le biais des contacts glissants.

En ce qui concerne les problèmes de commutation se manifestant au niveau de l'interface entre les contacts glissants et les conducteurs d'induit, il a été proposé d'adjoindre à des contacts ou balais principaux classiques chargés de transporter le courant d'induit en dehors des phases de commutation, des balais ou contacts auxiliaires d'une structure relativement complexe, constitués d'une succession de contacts glissants élémentaires adjoint à la zone de sortie d'un contact glissant principal, ces différents contacts auxiliaires élémentaires étant chacun reliés au conducteur du contact glissant principal par une résistance, ces résistances en série avec les différents contacts élémentaires croissant dans la direction s'éloignant du contact principal. Ces résistances ont pour objet d'augmenter le taux de décroissance du courant dans les conducteurs d'induit reliés aux différents contacts glissants. Cette technique, outre sa complexité et son encombrement, présente l'inconvénient d'être dissipative et de ne pas paraître véritablement efficace quant à la non-apparition d'arcs de commutation dans toutes les conditions de fonctionnement selon le courant d'induit et la vitesse de rotation. En outre, elle interdit les inversions de sens de rotation. Ce système n'apporte par ailleurs aucune solution en ce qui concerne les courants de circulation parasites entre les différents conducteurs de l'induit.

La présente invention a précisément pour objet de proposer des perfectionnements aux machines électriques tournantes à courant continu, permettant de résoudre grandement les problèmes fondamentaux liés aux phénomènes évoqués ci-dessus et qui limitent à l'heure actuelle le développement de ce type de machines, en proposant des moyens simples et efficaces adaptables à toutes les configurations de machines et conduisant à une commutation sans arc et à une annulation substantielle des courants de circulation.

La présente invention a pour autre objet de proposer des machines électriques tournantes perfectionnées offrant une puissance massique et un rendement améliorés, ou, pour une puissance massique égale, une tension induite supérieure à celle que l'on pourrait obtenir avec une machine homopolaire traditionnelle. Elle peut également être mise en œuvre, selon les besoins, dans les machines à courant continu classiques.

Pour ce faire, selon la présente invention, la machine électrique tournante à courant continu, comprenant un stator comportant une carcasse ferromagnétique, au moins un bobinage inducteur, et au moins un pôle inducteur ayant un axe de symétrie radial, et définissant un logement intérieur cylindrique pour un rotor comprenant une pluralité de conducteurs d'induit reliés, sur la face frontale d'une première extrémité du rotor, à un anneau collecteur sur lequel s'appuie au moins un contact électrique glissant monté sur le stator en départ axial par rapport à la face correspondante de la carcasse ferromagnétique et à proximité d'un pôle inducteur, caractérisée en ce qu'elle comprend, coopérant avec un pôle inducteur et dispose en regard sur la face correspondante de la carcasse, un pôle auxiliaire d'assistance à la commutation, sensiblement de même plan de symétrie que le pôle inducteur, ou ayant un plan de symétrie passant par l'axe interpolaire et alimenté par un courant asservi au moins au courant d'induit.

Selon une autre caractéristique de la présente invention, le courant d'alimentation des pôles auxiliaires est asservi également à la vitesse de rotation du rotor et/ou au courant inducteur.

Avec cet agencement de pôles auxiliaires associés aux pôles inducteurs, et selon l'asservissement du courant d'alimentation de ces pôles auxiliaires, certains de ces pôles auxiliaires peuvent être destinés, dans les machines hétéropolaires, à assister la commutation, les autres pôles auxiliaires étant alors destinés à annuler les courants de circulation, tous les pôles auxiliaires servant par contre d'aide à la commutation dans les machines acycliques à élévation de tension. On notera que, tant l'aménagement que l'alimentation et l'implantation de ces pôles auxiliaires permettent de distinguer ceux-ci des pôles auxiliaires parfois proposés dans les implantations de machines électriques classiques à courant continu, par exemple comme le décrit le brevet DE-C-53335 montrant des pôles auxiliaires situés près des contacts glissants et alimentés par un courant de fonctionnement de la machine pour en réguler la vitesse de rotation en fonction de sa charge.

D'autres caractéristiques et avantages de la présente invention ressortiront de la description suivante de modes·de réalisation, donnés à titre illustratif mais nullement limitatif, faite en relation avec les dessins annexés, sur lesquels :

Les figures 1 et 2 représentent schématiquement un stator et un rotor, respectivement, d'une machine bipolaire adaptée conformément à la présente invention (les pôles auxiliaires étant omis) ;

La figure 3 représente schématiquement, à plus grande échelle l'aménagement dans le prolongement d'un pôle inducteur de la machine de la figure 1, d'un pôle auxiliaire de commutation selon l'invention ;

La figure 4 est un diagramme représentant une machine selon la présente invention et illustrant l'aménagement des pôles auxiliaires de commutation et de leurs moyens d'alimentation en courant électrique ;

La figure 5 est une vue schématique en bout d'une telle machine, au droit d'un pôle inducteur, montrant les aménagements respectifs des pôles et des contacts glissants ;

La figure 6 est une vue schématique de côté d'une machine homopolaire à élévation de tension équipée de pôles auxiliaires conformément à l'invention ;

La figure 7 est une vue schématique en bout d'un mode d'aménagement préféré des pôles auxiliaires dans la machine de la figure 6, et la figure 8 représente schématiquement l'aménagement, autour de l'axe interpolaire de la machine de la figure 1, d'un pôle auxiliaire de commutation selon l'invention.

Comme précédemment mentionné, dans une machine électrique à induction, lorsqu'un conducteur d'induit, situé sous un des pôles inducteurs, et donc soumis à la force électromotrice ou contre-électromotrice nominale, commence à quitter les balais ou contacts glissants, le courant I qu'il transporte a une tendance naturelle à décroître en raison de l'augmentation progressive de la résistance de contact. Cependant, lorsque la vitesse de défilement est élevée, et que, donc, le temps de commutation est bref au niveau de chaque conducteur d'induit, la décroissance du courant se révèle toutefois insuffisamment rapide en raison de l'inductance du circuit d'induit. Ainsi, la densité de courant dans les balais ou contacts glissants en cours de commutation augmente considérablement et des arcs électriques, tant redoutés, apparaissent systématiquement. Ce phénomène est d'autant plus marqué que la résistance de contact des balais est faible, ce qui se révèle pourtant fortement souhaitable du point de vue du rendement de la machine électrique. A titre d'exemple, dans le cas particulier d'une machine génératrice, si la force électromotrice induite dans le conducteur qui quitte les balais ou contacts glissants est inférieure à celle qui existe aux bornes des autres conducteurs adjacents (qui sont momentanément tous réunis en parallèle par l'intermédiaire des balais ou contacts glissants), la décroissance du courant s'en trouvera facilitée. A l'inverse, il est souhaitable de s'attacher à faciliter la montée du courant dans le conducteur d'induit qui entre sous les contacts glissants en augmentant sa force électromotrice. Les inventeurs ont effectué des études très détaillées sur la croissance et la décroissance de ces courants dans les conducteurs d'induit par des méthodes numériques, et ont mis au point une technique, objet de la présente invention, rendant possible la réalisation d'une commutation sensiblement parfaite (croissance et décroissance du courant linéaires, de même qu'à vitesse de défilement infiniment lente), quels que soient le courant nominal de mise en œuvre de la machine et sa vitesse de défilement, en asservissant convenablement les forces électromotrices additives et soustractives dans les conducteurs d'induit qui commutent au droit des contacts glissants au moyen des pôles auxiliaires additionnels. Il faut noter que l'ordre de grandeur des forces électromotrices auxiliaires est faible (typiquement de l'ordre de la chute de tension aux balais ou contacts glissants) et qu'il est donc aisé de générer ces forces électromotrices de compensation à l'aide de pôles auxiliaires de faibles dimensions, lesquels peuvent donc être aménagés sans problèmes, quel que soit le nombre de pôles des machines multipolaires.

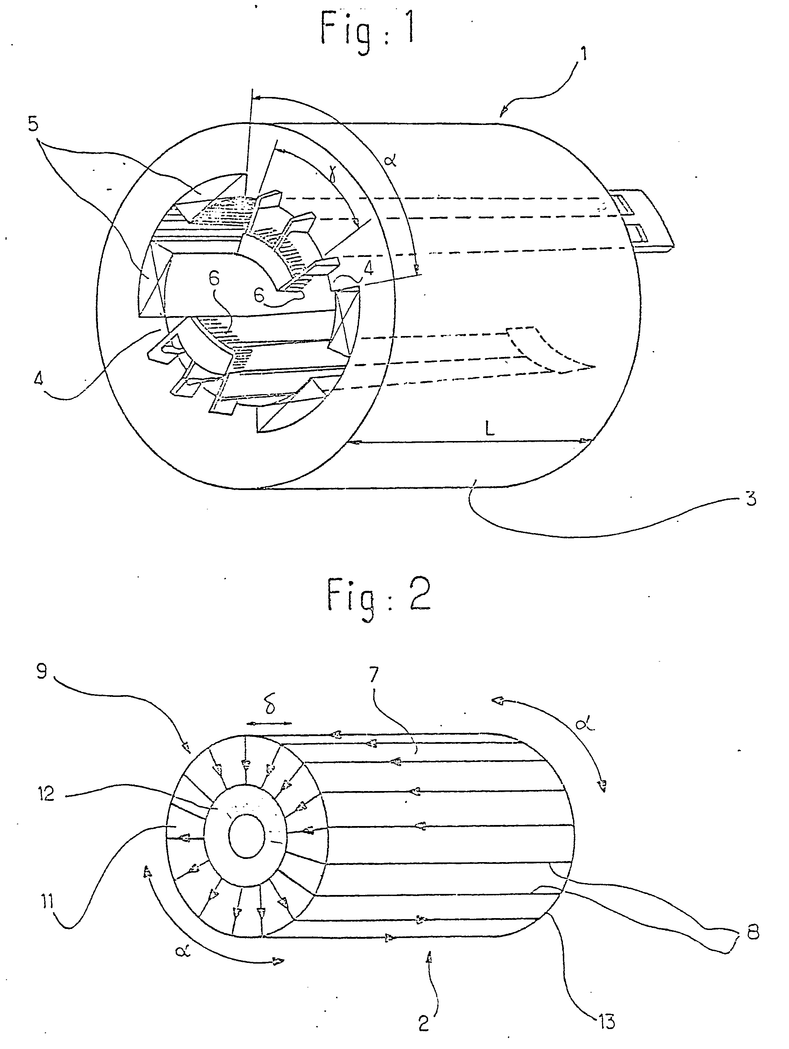

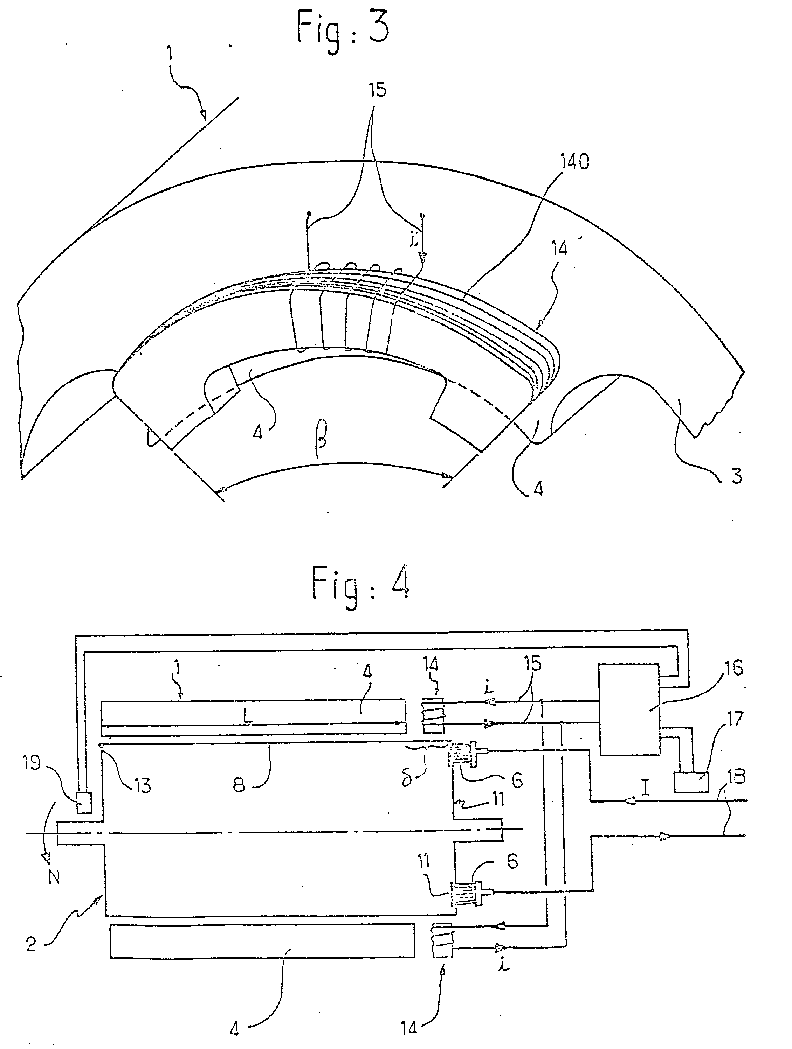

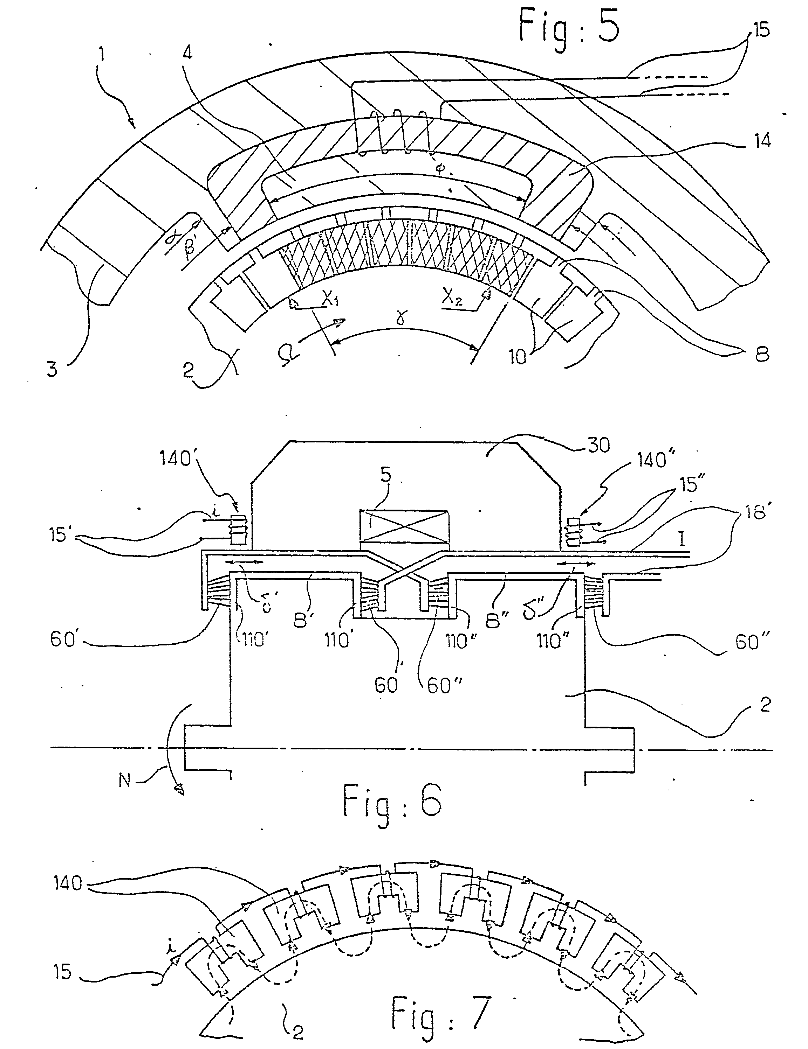

Comme représenté sur les figures 1 à 5, une machine électrique tournante à courant continu selon l'invention (en l'espèce bipolaire, à titre d'exemple) comprend un stator 1 et un rotor 2. La structure de stator 1 (figure 1) comprend une carcasse 3 en matériau magnétique, typiquement ferromagnétique, de forme générale cylindrique, formant, diamétralement opposés, des pôles inducteurs 4, ayant chacun un angle d'ouverture α, auxquels sont associés des bobinages inducteurs 5. Sur une des faces de la carcasse 3 sont rapportés, en déport axial par rapport à cette face, des contacts glissants 6, en l'espèce des contacts multifilamentaires, couvrant un angle γ inférieur à l'angle d'ouverture α du pôle inducteur adjacent et de même axe de symétrie radial que ce dernier. La structure de rotor 2 comprend un corps de rotor cylindrique 7 comportant, sur sa périphérie, une pluralité d'encoches longitudinales régulièrement angulairement réparties, chaque encoche renfermant un seul conducteur d'induit 8, isolé de la carcasse magnétique constituant le rotor. Les encoches renfermant les conducteurs sont convenablement inclinées par rapport à l'axe longitudinal pour éliminer les effets de réluctance. Ces conducteurs peuvent être massifs pour les machines de faible puissance, ou du type dit « ROEBEL » pour les machines de puissance élevée. Chaque conducteur 8 est rendu solidaire, à une première extrémité 9 du rotor 2, d'une plaquette de collection plane rapportée sur la face frontale 11 de la première extrémité 9 du rotor 2, ces plaquettes ayant une forme trapézoïdale et étant agencées les unes à côté des autres, conformément au motif des conducteurs d'induit 8, pour former un anneau collecteur 12 en regard des faces internes d'appui des contacts glissants 6. Il est bien évident que le collecteur, au lieu d'être du type frontal plan, peut être de tout autre type convenable, par exemple cylindrique ou conique, les plaquettes étant conformées en conséquence. Sur la figure 5, les plaquettes de collection hachurées sont celles en contact avec les contacts glissants associés au pôle inducteur 4. Avec le sens de rotation $\Omega$ indiqué, la plaquette $X_1$ et son conducteur d'induit associé commencent à entrer sous les contacts, tandis que la plaquette $X_2$ et son conducteur associé commencent à quitter les contacts. A la seconde extrémité du rotor 2, les différents conducteurs d'induit longitudinaux 8 sont réunis mutuellement en parallèle par un anneau de court-circuit 13 (figure 2) puisque la machine décrite est bipolaire. Dans le cas d'une machine multipolaire, l'anneau de court-circuit serait remplacé par un deuxième collecteur. Conformément à un aspect de l'invention, le corps de rotor 7 présente une légère sur-longueur axiale $\delta$ par rapport à la longueur L de la carcasse 3 du rotor 1, pour faire légèrement saillie par rapport à au moins une des faces frontales de la carcasse 3 en vue de l'aménagement des pôles auxiliaires devant intéresser les zones d'extrémités des conducteurs d'induit 8 de cette portion en saillie du corps de rotor, ainsi qu'on le verra ci-dessous.

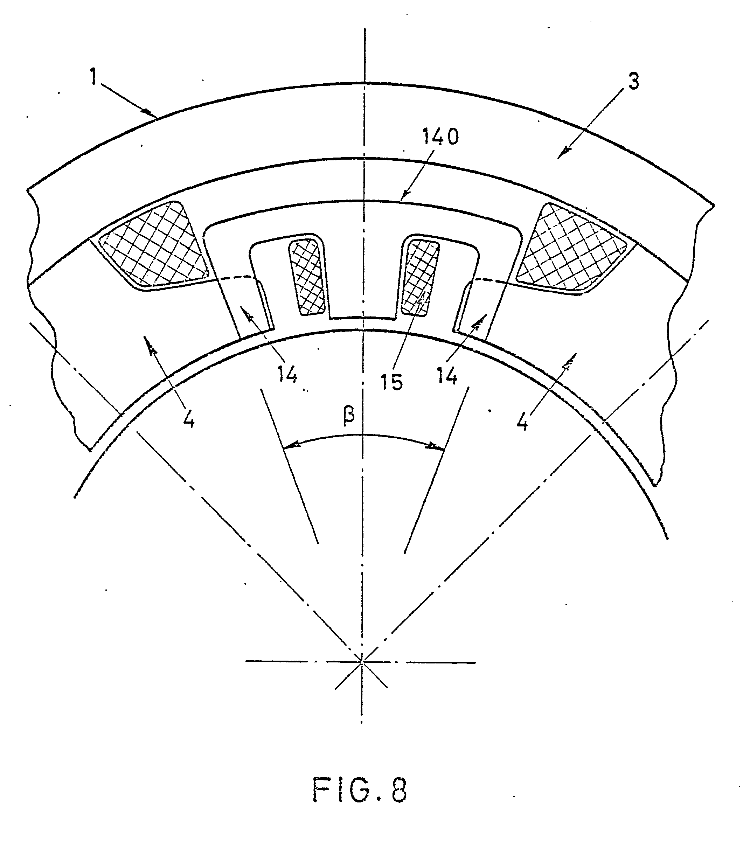

Comme représenté sur les figures 3 à 5, et 8, sur ladite face d'extrémité de la carcasse 3 sont disposés, dans le prolongement axial de chaque pôle inducteur 4, ou dans l'axe interpolaire, les pôles auxiliaires de petites dimensions 14, constitués par un circuit magnétique 140, réalisé en matériau ferro-magnétique feuilleté à faible hystérésis, se présentant soit sous la forme d'un étrier arrondi (figure 3), soit sous la forme d'un E arrondi (figure 8). Les pôles Nord et Sud de ces circuits magnétiques présentent un profil interne épousant celui des pôles inducteurs 4. Dans le premier cas, l'angle d'ouverture $\beta$ du circuit magnétique auxiliaire est légèrement inférieur à l'angle d'ouverture $\alpha$ du pôle inducteur. Le plan axial de symétrie azitumale du circuit 140 peut former, avec celui du pôle inducteur, un dièdre d'angle 0 compris entre 0 et $\pm (\alpha - \beta)$ pour tenir compte notamment de l'inclinaison des extrémités des filaments des balais. Dans le deuxième cas, l'angle d'ouverture est supérieur à l'angle d'ouverture interpolaire. Sur la partie centrale du circuit magnétique des pôles auxiliaires 14 est bobiné un conducteur d'alimentation parcouru par un courant d'intensité i régulé en fonction d'un courant de fonctionnement de la machine. L'aménagement des pôles auxiliaires 14 sur la périphérie de la partie en sur-longueur $\delta$ du corps de rotor 2 permet donc d'avoir les conducteurs d'induit en commutation intéressés par le flux magnétique des pôles auxiliaires qui induit, dans les conducteurs d'induit en commutation, la force électromotrice ou contre-électromotrice e de compensation.

Comme susmentionné, dans le cas de machines hétéropolaires, au moins certains des pôles auxiliaires sont préférentiellement assignés à une assistance à la commutation. Dans ce cas, comme représenté sur la figure 4, les conducteurs (15) d'alimentation de pôles auxiliaires 14 sont reliés à un dispositif d'alimentation et d'asservissement 16 recevant les signaux provenant d'une part, d'un détecteur 17 de courant d'induit I circulant dans les lignes 18 connectées aux contacts glissants 6, et, d'autre part, d'un détecteur 19 de la vitesse de rotation N du rotor 2 pour alimenter les pôles auxiliaires 14 avec un courant de compensation i asservi, par le dispositif 16, au courant d'induit I et à la vitesse de rotation N et réaliser ainsi, dans les conducteurs qui commutent, un équilibrage parfait entre les forces électromotrices additives et soustractives. La technologie du dispositif d'alimentation et d'asservissement 16, du type analogique ou numérique, est à la portée de tout technicien moyennement averti, de sorte qu'on en omettra ici le détail.

A titre d'exemple, pour une génératrice, dont la résistance de charge R (purement résistive) est égale à la résistance interne Ro (correspondant à la résistance électrique au niveau des contacts, la résistance r des enroulements étant supposée négligeable, ainsi que l'inductance mutuelle entre deux conducteurs d'induit adjacents), en appelant $\Delta t$ le temps de commutation (c'est-à-dire le temps de parcours, fonction de la vitesse de rotation, d'une plaquette de collecteur 10 sous un balai), E la différence de potentiel aux bornes des contacts glissants, et $\tau$ la constante de temps de la machine ($\tau = L/Ro$, où L est l'inductance propre de la machine), on a la relation suivante, déterminant la force électromotrice de compensation e (et donc le courant de compensation i) :

$$e/E = 0,5 \times \tau/\Delta t$$

Comme également susmentionné, les pôles auxiliaires peuvent également servir, dans les machines hétéropolaires, à une autre fonction qu'à l'assistance à la commutation, en l'espèce à l'annulation des courants de circulation dans les conducteurs d'induit. Dans une machine électrique du type considéré, il est à peu près inévitable que l'induction sous les pôles inducteurs 4 soit légèrement non homogène lorsqu'on se déplace azimuthalement sous ces pôles. Cette non-homogénéité peut atteindre quelques pourcents si les précisions de fabrication et de montage de la machine ne sont pas d'excellente qualité, ou surtout si le matériau ferromagnétique du stator se trouve très saturé. Dans ces conditions, il est possible que des courants de circulation notables, voire très intenses, soient mis en jeu dans les conducteurs d'induit 8 sous les pôles inducteurs, conduisant ainsi à des dissipations prohibitives. En plaçant, comme décrit précédemment, dans le prolongement axial de certains pôles inducteurs 4 de la machine des pôles auxiliaires 14 de même constitution générale que celle décrite en relation avec les figures 3 à 5, on peut arriver également à homogénéiser convenablement, par expérimentation, les forces électromotrices ou contre-électromotrices aux bornes de chaque conducteur d'induit sous les pôles. Dans ce cas, toutefois, les pôles auxiliaires sont alimentés en un courant i' asservi cette fois au courant inducteur au moyen d'un dispositif d'alimentation et d'asservissement (non représenté) semblable au dispositif 16 de la figure 4, associé à un détecteur de courant du type du détecteur 17 ainsi qu'à un détecteur d'induction magnétique pour les machines à excitation séparée. Dans la pratique, notamment pour les grosses machines de forte puissance, à chaque pôle inducteur sera associé un pôle auxiliaire d'assistance à la commutation et au moins un pôle d'annulation des courants de circulation, disposé dans l'écartement φ entre les pôles Nord et Sud du pôle 14 d'assistance à la commutation.

On notera que les circuits électro-magnétiques additionnels d'assistance à la commutation ou d'annulation des courants de circulation sont absolument indépendants du circuit magnétique inducteur de la machine, et ne sont donc en aucune façon affectés par la saturation de ce dernier.

On a représenté sur les figures 6 et 7 un mode de réalisation d'une machine homopolaire à élévation de tension conformément à la présente invention. Dans une telle machine homopolaire, les conducteurs d'induit sont reliés, à leurs extrémités longitudinales, à des anneaux collecteurs coopérant avec des contacts glissants reliés électriquement deux par deux et croisés, de façon à faire coopérer en série les conducteurs situés dans les deux demi-parties actives. En effet, dans le mode de réalisation de la figure 6, le rotor 2 est décomposé en deux demi-parties longitudinales dont les conducteurs d'induit parallèles 8' et 8" sont chacun reliés à des paires d'anneaux collecteurs frontaux 110' et 110" coopérant avec des paires croisées de contacts glissants multifilamentaires 60' et 60". Dans ce type de machine, le rotor 8 est disposé dans un circuit magnétique principal, formant pièce polaire 30 équipé d'un bobinage inducteur 5. Comme dans le mode de réalisation précédent, le corps de rotor 2 fait saillie axialement, mais de part et d'autre, du circuit magnétique 30 d'une distance δ' et δ", respectivement. Egalement, comme dans le mode de réalisation précédent, sur la périphérie de ces parties en saillie δ' et δ" du rotor sont disposés des pôles auxiliaires 140 (140' pour la partie gauche de la machine, 140" pour la partie droite) alimentés par des conducteurs 15' et 15" en courant i asservi au courant d'induit I et à la vitesse de rotation N du rotor. Ici, à chaque face frontale du circuit magnétique principal 30 est associée une série de pôles auxiliaires 140 angulairement répartis et alimentés en série par les conducteurs 15, comme on le voit sur la figure 7. Les conducteurs fixes, situés à la périphérie interne du pôle inducteur annulaire et servant notamment à la compensation de réaction d'induit, ont également pour objet d'assurer convenablement la mise en série des conducteurs d'induit de chaque demi-partie active.

Quoique la présente invention ait été décrite en relation avec des modes de réalisation particuliers, elle ne s'en trouve pas limitée mais est au contraire susceptible de modifications et de variantes. Elle peut en effet s'appliquer de façon tout à fait similaire tant aux machines multipolaires qu'aux machines acycliques à élévation de tension, la circulation du flux auxiliaire de compensation pouvant s'effectuer de différentes manières suivant la morphologie des machines, en fonction des impératifs technologiques. On notera que pour certaines machines à utilisation particulière, on peut remplacer les pôles auxiliaires par des aimants permanents ou combiner ces derniers avec des éléments de pôles auxiliaires simplifiés. Les machines selon l'invention peuvent trouver leur utilisation en raison de leur puissance massique et de leur rendement élevés, dans des domaines très divers tels que la traction, la propulsion ou les variateurs électromagnétiques, les machines impulsionnelles ou les lanceurs électromagnétiques.

**Revendications**

1. Machine électrique tournante à courant continu, comprenant un stator (1) comportant une carcasse ferromagnétique (3), au moins un bobinage inducteur, et au moins un pôle inducteur (4, 30) ayant un axe de symétrie radial, et définissant un logement intérieur cylindrique pour un rotor (2) comprenant une pluralité de conducteurs d'induit (8) reliés sur la face frontale (11) d'une première extrémité (9) du rotor, à un anneau collecteur (12) sur lequel s'appuie au moins un contact électrique glissant (6) monté sur le stator en déport axial par rapport à la face correspondante de la carcasse ferromagnétique et à proximité d'un pôle inducteur, caractérisée en ce qu'elle comprend, coopérant avec un pôle inducteur (4, 30) et dispose en regard sur la face correspondante de la carcasse (3) un pôle auxiliaire d'assistance à la commutation (14, 140), sensiblement de même plan de symétrie que le pôle inducteur, ou ayant un plan de symétrie passant par l'axe interpolaire et alimenté par un courant (i, i') asservi au moins au courant d'induit (I).

2. Machine selon la revendication 1, caractérisée en ce que le rotor (2) fait saillie longitudinalement par rapport à au moins ladite extrémité du stator (1), le pôle auxiliaire (14, 140) étant disposé axialement en bout du pôle inducteur adjacent pour intéresser la périphérie de la partie en saillie (δ) du rotor (2).

3. Machine selon la revendication 1, caractérisée en ce que le rotor (2) fait saillie longitudinalement par rapport à au moins l'extrémité du stator (1), le circuit magnétique auxiliaire (140) étant placé dans l'axe interpolaire en bout du pôle inducteur adjacent, de façon à ce que les pôles auxiliaires (14) intéressent la périphérie de la partie en saillie (δ) du rotor (2).

4. Machine selon la revendication 2, caractérisée en ce que les contacts glissants (6) sont du type multifilamentaire et sont disposés pour s'étendre suivant un arc de cercle (γ) ayant sensiblement le même plan de symétrie azimuthale que le pôle inducteur (4).

5. Machine selon la revendication 4, caractérisée en ce que le rotor (2) comprend des encoches angulairement réparties, un conducteur d'induit (8) disposé dans chaque encoche, et un anneau de court-circuit (13) des conducteurs d'induit (8) à la seconde extrémité du rotor.

6. Machine selon la revendication 5, caractérisée en ce qu'elle comprend un dispositif (16) pour asservir également le courant d'alimentation (i) du pôle auxiliaire (14, 140) à la vitesse de rotation (N) du rotor (2).

7. Machine selon la revendication 6, caractérisée en ce qu'elle comprend un dispositif pour asservir le courant (i') du pôle auxiliaire (14) au courant inducteur.

8. Machine électrique selon la revendication 7, caractérisée en ce qu'elle est une machine hétéropolaire.

9. Machine selon la revendication 7, caractérisée en ce qu'elle est une machine homopolaire à élévation de tension.

## Claims

1. Rotating electric direct current machine including one stator (1) with ferromagnetic frame (3), at least one field winding and at least one field pole (4, 30) with a radial axis of symmetry, and providing an internal cylindrical housing for rotor (2) with a number of armature conductors (8) connected on front face (11) at one end (9) of the rotor to slip ring (12) against which bears at least one sliding electric contact (6) mounted on the stator axially offset with respect to the corresponding face of the ferromagnetic frame and near one field pole (4, 30), characterized in that it includes, cooperating with a field pole (4, 30) and located opposite the corresponding face of frame (3) an auxiliary compensating pole to assistance commutation (14, 140), substantially in the same plane of symmetry as the field pole or with a plane of symmetry going through the interpole axis and supplied by a current (i, i') slaved at least to the armature current (I).

2. Machine as per claim 1, characterized in that the rotor (2) longitudinally protrudes with respect to at least said end of stator (1), with the auxiliary pole (14, 140) located axially at the end of the adjacent field pole to act on the edge of the protruding part (δ) of the rotor (2).

3. Machine as per claim 1, characterized in that the rotor (2) longitudinally protrudes with respect to at least the end of stator (1), with the auxiliary magnetic circuit (140) placed in the interpole axis at the end of the adjacent field pole such that auxiliary poles (14) act on the edge of the protruding part (δ) of the rotor (2).

4. Machine as per claim 2, characterized in that sliding contacts (6) are of the multifilament type and are located to extend along an arc (γ) with substantially the same plane of azimuth symmetry as field pole (4).

5. Machine as per claim 4, characterized in that rotor (2) includes angularly distributed notches, an armature conductor (8) located in each notch and a short circuit ring (13) of armature conductors (8) at the second end of the rotor.

6. Machine as per claim 5, characterized in that it includes a system (16) to also slave the supply current (i) of auxiliary pole (14, 140) to the speed of rotation (N) of rotor (2).

7. Machine as per claim 6, characterized in that it includes a system to slave the current (i') of auxiliary pole (14) to the field current.

8. Electric machine as per claim 7, characterized in that it is a heteropolar machine.

9. Machine as per claim 7, characterized in that it is a homopolar machine with voltage increase.

## Patentansprüche

1. Drehende elektrische Gleichstrommaschine, bestehend aus einem Stator (1) mit einem ferromagnetischen Feldgestell (3), aus mindestens einer Feldwicklung und mindestens einem Feldpol (4, 30) mit radialer Symetrieachse, wobei das Feldgestell eine zylindrische Aufnahme für einen Läufer (2) darstellt, der aus mehreren, auf der Frontseite (11) eines ersten Läuferendes (9) mit einem Kollektorring (12) verbundenen Ankerleitungen (8) besteht, und wobei sich auf diesem Kollektorring mindestens ein gleitender, auf dem Stator, jedoch gegenüber der entsprechenden Frontseite des Feldgestells axial verschoben und in unmittelbarer Nähe eines Feldpols angebrachter elektrischer Kontakt (6) stützt, dadurch gekennzeichnet, daß sie einen mit einem Feldpol (4, 30) mitwirkenden und gegenüber der entsprechenden Frontseite des Feldgestells (3) angeordneten Hilfskompensationspol (14, 140) aufweist, der in der Symetrieebene des Feldpols steht, oder dessen Symetrieebene mit der Polachse fluchtet, und von einem, mindestens durch den Ankerstrom geregelten Strom (i, i) durchflossen wird.

2. Drehende E-Maschine nach Anspruch 1, dadurch gekennzeichnet, daß der Läufer (2) in Längsrichtung mindestens gegenüber der erwähnten Frontseite des Feldgestells (1) herausragt, wobei der Hilfspol (14, 140) axial, im Anschluß des benachbarten Feldpols und über den herausragenden Teil (δ) des Läufers (2) angeordnet ist.

3. Drehende E-Maschine nach Anspruch 1, dadurch gekennzeichnet, daß der Läufer in Längsrichtung gegenüber mindestens einer der Frontseiten des Feldgestells (1) herausragt, wobei der Hilfsmagnetkreis (140) auf der Polachse, im Anschluß des benachbarten Feldpols angeordnet ist, so daß die Hilfspole (14) über den Umfang des herausragenden Teils (δ) des Läufers (2) stehen.

4. Drehende E-Maschine nach Anspruch 2, dadurch gekennzeichnet, daß die gleitenden Kontakte (6) aus einem mehrfaserigen Schleifer bestehen und so angeordnet sind, daß sie einen Kreisbogen (γ) decken, der beinahe der azimutalen Symetrieebene des Feldpols (4) entspricht.

5. Drehende E-Maschine nach Anspruch 4, dadurch gekennzeichnet, daß der Läufer (2) mit winkelmässig verteilten Ankernuten, mit einem in jeder Nut eingefaßten Ankerleiter (8) sowie mit einem Kurzschlußring (13) versehen ist, der die Ankerleiter (8) auf der zweiten Frontseite des Läufers miteinander verbindet.

6. Drehende E-Maschine nach Anspruch 5, dadurch gekennzeichnet, daß sie mit einer Vorrichtung (16) versehen ist, die auch zur Ansteuerung des Speisestromes (i) des Hilfskompensationspols (14, 140) nach dem Wert der Drehgeschwindigkeit (N) des Läufers (2) dient.

7. Drehende E-Maschine nach Anspruch 6, dadurch gekennzeichnet, daß sie mit einer Vorrichtung zur Ansteuerung des Stromes (i′) des Hilfskompensationspoles (14) nach dem Wert des Feldstromes versehen ist.

8. Drehende E-Maschine nach Anspruch 7, dadurch gekennzeichnet, daß es sich um eine Wechselpolmaschine handelt.

9. Drehende E-Maschine nach Anspruch 7, dadurch gekennzeichnet, daß es sich um eine spannungserhöhende gleichpolige Maschine handelt.

# Fig : 1

# Fig : 2

0 074 895

# Fig. 3

# Fig. 4

2

0 074 895

Fig : 5

Fig : 6

Fig : 7

FIG. 8